# EUROPEAN PATENT APPLICATION

(11) **EP 4 745 735 A1**
(43) Date of publication of application: **20.05.2026**
(21) Application number: 24838681.5
(22) Date of filing: 04.07.2024
(51) Int. Cl.: G06F 3/0481, G06F 9/451

(54) **SESSION INFORMATION DISPLAY METHOD AND APPARATUS, ELECTRONIC DEVICE, AND STORAGE MEDIUM**

(30) Priority: 11.07.2023 CN 202310848308
(71) Applicant: Beijing Zitiao Network Technology Co., Ltd., Beijing 100190 (CN)
(72) Inventor: WAN, Shiqi, Beijing 100028 (CN); SHU, Siqi, Beijing 100028 (CN)
(74) Representative: Grünecker Patent- und Rechtsanwälte PartG mbB
(86) International application number: PCT/CN2024/103554
(87) International publication number: WO 2025/011426

(57) **Abstract**

Embodiments of the present disclosure provide a session information display method and apparatus, an electronic device, and a storage medium. The method comprises: receiving a display operation of a first user for a session interface; and in response to the display operation, displaying the session interface, wherein the session interface supports the use of a first display state in displaying at least part of first position information in the session interface, the display state of the first position information is switched to a second display state upon determination that the user sends second position information for the first position information, position information in the session interface is session information, the position information comprises the first position information and/or the second position information, and the position information comprises an image and/or text.

## Description

The present application claims the priority of the Chinese patent application No. 202310848308.0 filed on July 11, 2023, where the disclosure thereof is incorporated herein by reference in its entirety and constitutes a part of the present application.

### TECHNICAL FIELD

The embodiments of the present disclosure relate to a method, an apparatus, an electronic device, and a storage medium for displaying chat information.

### BACKGROUND

In some applications, users can share position information in a chat interface. However, the position information is displayed and interacted in a unitary way.

### SUMMARY

The embodiments of the present disclosure provide a method, an apparatus, an electronic device, and a storage medium for displaying chat information to increase the display manners and interaction manners of position information.

In a first aspect, an embodiment of the present disclosure provides a method for displaying chat information, including:
receiving a display operation for a chat interface from a first user;
displaying the chat interface in response to the display operation, wherein the chat interface supports displaying, in a first display state, at least part of first position information in the chat interface, and the first position information is switched to a second display state in response to determining that a user sends second position information for the first position information, wherein position information in the chat interface is chat information, the position information includes at least one selected from a group consisting of the first position information and the second position information, and the position information includes at least one selected from a group consisting of an image and text.

In a second aspect, an embodiment of the present disclosure provides an apparatus for displaying chat information, including:
an operation receiving module configured to receive a display operation for a chat interface from a first user;
an interface display module configured to, display the chat interface in response to the display operation, wherein the chat interface supports displaying, in a first display state, at least part of first position information in the chat interface, and the first position information is switched to a second display state in response to determining that a user sends second position information for the first position information, wherein position information in the chat interface is the chat information, the position information includes at least one selected from a group consisting of the first position information and the second position information, and the position information includes at least one selected from a group consisting of an image and text.

**In** a third aspect, an embodiment of the present disclosure provides an electronic device, including:
at least one processor; and
a memory communicatively connected to the at least one processor; wherein
the memory stores a computer program being executable by the at least one processor, and when the computer program is executed by the at least one processor, cause the at least one processor implements a method for displaying chat information according to the embodiment of the present disclosure.

In a fourth aspect, an embodiment of the present disclosure provides a computer-readable storage medium with computer instructions stored thereon, wherein the computer instruction is configured to cause a process to implement the method for displaying chat information according to the embodiment of the present disclosure.

### BRIEF DESCRIPTION OF DRAWINGS

The above and other features, advantages and aspects of embodiments of the present disclosure will become more apparent by referring to the following detailed description when taken in conjunction with the accompanying drawings. Throughout the drawings, the same or similar reference numerals indicate the same or similar elements. It should be understood that the drawings are schematic, and the original and elements are not necessarily drawn to scale.
Fig. 1 is a schematic flow chart of a method for displaying chat information provided in an embodiment of the present disclosure;
Fig. 2 is a schematic diagram of a method for displaying first position information provided in an embodiment of the present disclosure;
Fig. 3 is a schematic diagram of another method for displaying first position information provided in an embodiment of the present disclosure;
Fig. 4 is a schematic diagram of yet another method for displaying first position information provided in an embodiment of the present disclosure;
Fig. 5 is a schematic diagram of a fourth method for displaying first position information provided in an embodiment of the present disclosure;
Fig. 6 is a schematic diagram of a position preview interface provided in an embodiment of the present disclosure;
Fig. 7 is a schematic flow chart of another method for displaying chat information provided in an embodiment of the present disclosure;
Fig. 8 is a schematic diagram of another method for displaying a position preview interface provided in an embodiment of the present disclosure;
Fig. 9 is a schematic diagram of yet another method for displaying a position preview interface provided in an embodiment of the present disclosure;
Fig. 10 is a structural block diagram of an apparatus for displaying chat information provided in an embodiment of the present disclosure; and
Fig. 11 is a structural schematic diagram of an electronic device provided in an embodiment of the present disclosure.

### DETAILED DESCRIPTION

The embodiments of the present disclosure will be described in more detail below with reference to the drawings. Although some embodiments of the present disclosure are shown in the drawings, it should be understood that the present disclosure can be implemented in various forms, and should not be construed as being limited to the embodiments set forth herein. Rather, these embodiments are provided for a more thorough and complete understanding of the present disclosure. It should be understood that the drawings and embodiments of the present disclosure are only for exemplary purposes, and are not intended to limit the protection scope of the present disclosure.

It should be understood that the various steps described in the method implementations of the present disclosure may be performed in different orders and/or in parallel. In addition, the method implementations may include additional steps and/or omit performing the illustrated steps. The scope of the present disclosure is not limited in this respect.

As used herein, the term "include" and its variants are open-ended inclusions, that is, "include but not limited to". The term "based on" is "based at least in part on". The term "an embodiment" represents "at least one embodiment"; the term "another embodiment" represents "at least one other embodiment"; the term "some embodiments" represents "at least some embodiments". Relevant definitions of other terms will be given in the description below.

It should be noted that the concepts such as "first" and "second" mentioned in the present disclosure are only used to distinguish different apparatuses, modules or units, and are not used to limit the order or interdependence of the functions performed by these apparatuses, modules or units.

It should be noted that the modifications of "one" and "a plurality of" mentioned in the present disclosure are illustrative rather than restrictive, and those skilled in the art should understand that unless the context clearly indicates otherwise, they should be understood as "one or more".

The names of messages or information exchanged between multiple apparatuses in the implementations of the present disclosure are only used for illustrative purposes, and are not used to limit the scope of these messages or information.

It may be understood that before using the technical solution disclosed in the embodiments of the present disclosure, the user should be informed of the type, scope of use, usage scenario, etc. of the personal information involved in the present disclosure in an appropriate manner according to relevant laws and regulations, and the user's authorization should be obtained.

For example, in response to receiving an active request from the user, prompt information is sent to the user to explicitly prompt the user that the operation requested to be performed will require the acquisition and use of the user's personal information. Thus, the user can independently select whether to provide personal information to software or hardware such as an electronic device, an application, a server, or a storage medium that performs the operation of the technical solution of the present disclosure according to the prompt information.

As an optional but non-limiting implementation, the manner of sending the prompt information to the user in response to receiving the active request from the user may be, for example, a pop-up window, and the prompt information may be presented in the pop-up window in the form of text. In addition, the pop-up window may also carry a selection control for the user to select "agree" or "disagree" to provide personal information to the electronic device.

It may be understood that the above process of notifying and obtaining the user's authorization is only illustrative, and does not constitute a limitation on the implementations of the present disclosure. Other manners that meet relevant laws and regulations may also be applied to the implementations of the present disclosure.

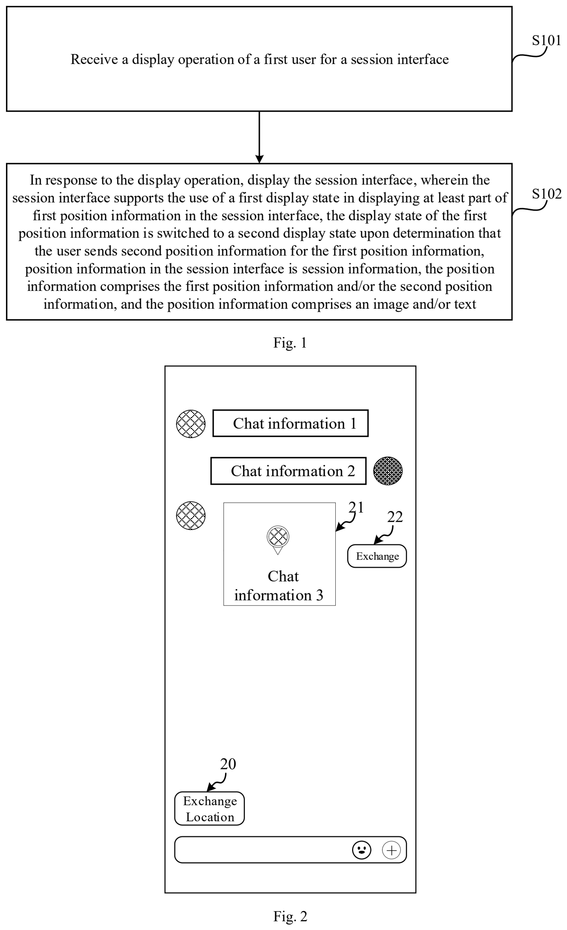

Fig. 1 is a schematic flow chart of a method for displaying chat information provided in an embodiment of the present disclosure. The method may be implemented by an apparatus for displaying chat information, where the apparatus may be implemented by software and/or hardware and may be configured in an electronic device, for example, in a mobile phone or a tablet. The method for displaying chat information provided in the embodiment of the present disclosure is adapted to a scenario where at least part of the position information is displayed in a chat interface in different display states before and after switching. As shown in Fig. 1, the method for displaying chat information in the present embodiment may include:
S101: receiving a display operation for a chat interface from a first user.

The first user may be a user who performs a display operation for the chat interface. The chat interface may be configured for the user to view the chat information received and to send chat information, which may be a single chat interface between the first user and a single second user, or a group chat interface between the first user and a plurality of second users. The display operation may be an operation for instructing to display the chat interface, and the display operation may be performed in any way.

In the present embodiment, when the first user wants to view chat information in a chat interface or send chat information in a chat interface, the user may perform a display operation for the chat interface. Correspondingly, the current application may receive a display operation performed by the first user.

S102: displaying the chat interface in response to the display operation, wherein the chat interface supports displaying, in a first display state, at least part of first position information in the chat interface, and the first position information is switched to a second display state in response to determining that a user sends second position information for the first position information, wherein position information in the chat interface is chat information, the position information includes at least one selected from a group consisting of the first position information and the second position information, and the position information includes at least one selected from a group consisting of an image and text.

It may be understood that a position-based interaction needs to be carried out with full authorization from the user.

The first position information may be a kind of position information that may be used by other users in the chat interface to perform position information exchange. Before another user exchanges position information for the first position information, the first position information may be displayed in a first display state in the chat interface at a receiving terminal. After a user that receives the first position information exchanges position information for the first position information, the first position information may be displayed in a second display state in the chat interface of the user. The second position information may be position information corresponding to the first position information and is configured for exchange with the first position.

First position information and second position information for the first position may be different chat information sent by different users in the chat interface. The first position information may be sent by any user in the chat interface to describe an associated position of the user. A second position information for one first position information may be sent by another user in the chat interface that is different from the user that sent the first position information, and the second position information is configured to describe an associated position of the another user.

The position information (for example, the first position information and/or the second position information) in the chat interface may include at least one of an image and text. For example, the position information may include a geographic position image corresponding to at least one of a corresponding position and textual description of a corresponding position. The text description information, for example, may include at least one of a name and an address of a position corresponding to the position information, etc.

The first display state and the second display state are two different display states of the position information, and the display styles of the first display state and the second display state are not limited herein. Optionally, the first display state is a blurred display state, and the second display state is a clear display state. As an example, the position information in the clear display state may be blurred to obtain the position information in the blurred display state. The blurring method is not limited herein. For example, a mosaic effect may be applied to the position information in the clear display state to obtain the position information in the blurred display state. In the following description, as an example, the first display state is the blurred display state, and the second display state is the clear display state.

It may be understood that the chat interface may also support the display of position information that will not perform position information exchange by other users in the chat interface. For example, the chat interface may support operations to send different positions by users, where part of the position-sending operations may be configured to instruct to send position information for other users in the chat interface to exchange position information, that is, the first position information. Part of the position-sending operations may be used to instruct to send position information that will not perform exchange of position information by other users in the chat interface. For example, after the position information being sent, the position information is displayed in the clear display state on the chat interface at a sending terminal and a receiving terminal.

Specifically, when a display operation for the chat interface is received from a first user, the chat interface may be displayed, and one or more pieces of chat information sent by the user on the chat interface may be displayed in the chat interface.

The chat information on the chat interface may include at least one of first position information sent by the first user and first position information sent by a second user. Before a user sends second position information for the first position, the first position information may be displayed in the first display state, such as a blurred display state. After the user sends the second position information for the first position, the first position information may be switched to a second display state, such as a clear display state.

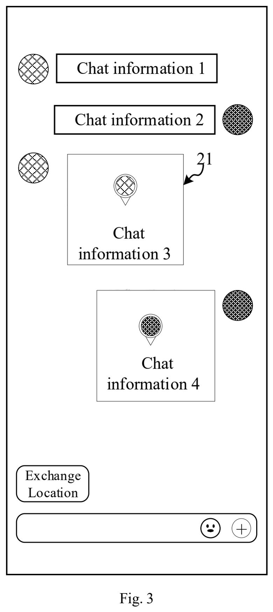

As an example, for the first position information received by the first user, when the first user has not sent the corresponding second position information for the first position information, the first position information may be displayed in the blurred display state in the chat interface of the first user, as shown in Fig. 2 as chat information 3. After the first user sends the corresponding second position information for the first position information (as shown in Fig. 3 as chat information 4), the first position information may be switched to display in the clear display state in the chat interface of the first user, as shown in Fig. 3.

As an example, for the first position information sent by the first user, after the first user sends the first position information, when second position information sent by other users on the chat interface for the first position information being not received, the first position information may be displayed in a blurred display state in the chat interface of the first user. After the second position information sent by at least one or all other users on the chat interface being received, the first position information may be switched to display in a clear display state on the chat interface of the first user.

Taking the first position information as the chat information 3 shown in Fig. 2 as an example, after the chat information 3 being sent, the chat information 3 may be displayed in the blurred display state in the chat interface of the user who receives the chat information 3. After a user who has received the chat information 3 in the chat interface sends second position information in response to the chat information 3, the chat information 3 may be switched to a clear display state in the chat interface of the user.

It may be understood that the display state of the first position information in the chat interface of the sending user may be configured according to needs. As an example, regardless of whether the user who has received the first position information sends the second position information for the first position information, the first position information may be displayed in the clear state on the chat interface of the sending user. It is also possible to consider whether the receiving user of the first position sends the second position information for the first position information, where when none of the receiving users sends the second position information for the first position information, the first position information is displayed in a blurred display state on the chat interface of the sending users. After at least one receiving user has sent the second position information for the first position information, or after all the receiving users have sent the second position information for the first position information, the first position information is displayed in the clear display state in the chat interface of the sending user, which is not limited in the embodiments herein.

In this embodiment, the first position information received before the user sends the second position information is displayed in the first display state, and the first position information received after the user sends the second position information is displayed in the second display state, such that it is supported that a user may view the first position information sent by other users by sending the second position information, which diversifies the display manner and interaction manner of the position information.

In this embodiment, the first position information may contain position-related information content, and may or may not contain non-position-related information content. The position-related information content may be, for example, description information of a position, such as a name and an address of the position, or an image associated with the position. The image associated with a position may be for example an image that may be shoot at that position, an image of a place at that position, and so on. The non-position-related information content may be the information content other than the description of the position, and the non-position-related information content is not limited. As an example, the non-position-related information content may include identification information of the user that sends the first position information. The identification information may include, for example, at least one of a profile picture and a nickname.

In the present embodiment, the chat interface may support displaying, in the first display state, at least part of the first position information in the chat interface. For example, the chat interface may support displaying, in the first display state, at least part of the information content of the first position information on the chat interface. As an example, the at least part of the information content includes information content of the first position information that is related to a position. At this time, optionally, the chat interface supports displaying, in the first display state, at least part of the first position information on the chat interface, which includes: the chat interface supports displaying, in the first display state, at least part of the position-related information content of the first position information. For example, when first position information is displayed in the first display state, all the information content of the first position information may be configured to be displayed in the first display state, or the position-related information content of the first position information may be configured to be displayed in the first display state, which may be configured according to needs.

In the present embodiment, it may be supported that the first user may send the first position information in the chat interface, such that a user in the chat interface other than the first user may exchange position information with the first user by sending the second position information. After the first user has sent the first position information, the first position information may be displayed in the second display state in the chat interface of the first user, or the first position information may be displayed in the first display state until it is configured that another user in the chat interface sends the second position information corresponding to the first position information. The first position information may be displayed in the second display state in the chat interface of another user until the user sends the second position information corresponding to the first position information.

In some embodiments, the first position information includes second position information to be exchanged sent by the first user, where displaying the chat interface includes: in response to a preset information sending operation, sending the second position information to be exchanged and displaying the second position information to be exchanged in the first display state; and in response to determining the second position information corresponding to the second position information to be exchanged has been sent, switching the second position information to be exchanged from the first display state to the second display state.

The second position information to be exchanged may be understood as the first position information sent by the first user. The preset information sending operation may be a trigger operation for instructing to send the first position information, and the preset information sending operation may be executed in any method, which is not limited herein. As an example, the preset information sending operation may be an operation configured to send a trigger for a preset sending control.

**In** the above embodiment, the first position information sent by the first user may be displayed in the first display state in the chat interface of the first user until it is determineed that another user on the chat interface has sent the second position information corresponding to the first position information. **In** this way, the display style of the first position information at the sending user side is enriched and facilitating the sending user to determine whether the second position information for the first position information sent by the sending user is received..

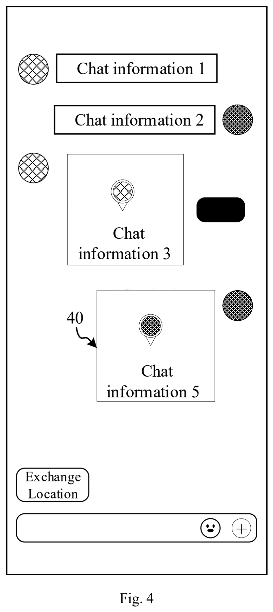

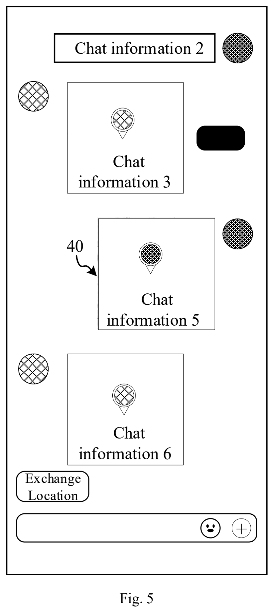

Specifically, when receiving a preset information sending operation, the second position information to be exchanged 40 may be sent, and the second position information to be exchanged 40 (as shown by chat information 5 in Fig. 4) may be displayed in the first display state in the chat interface. After at least one or all users other than the first user in the chat interface send(s) the second position information corresponding to the second position information to be exchanged 40 (as shown by chat information 6 in Fig. 5), the second position information to be exchanged 40 may be switched from the first display state to the second display state, and the second position information corresponding to the second position information to be exchanged 40 may be displayed in the second display state on the chat interface, as shown in Fig. 5.

In some embodiments, after displaying the chat interface, the method further includes: in response to a second information display operation, displaying associated position information of the first user in a clear display state in a position preview interface; where sending the second position information to be exchanged includes: sending the second position information to be exchanged according to the associated position information displayed on the position preview interface.

The second information display operation be a trigger operation for instructing to display the associated position information of the first user on the position preview interface, and the second information display operation may be performed in any method, which is not limited herein. As an example, the second position display operation may be a trigger operation that triggers a position exchange control. The display position of the position exchange control may be configured according to needs. For example, the position exchange control may remain being displayed in the chat interface, may be displayed in the chat interface based on a trigger operation from a certain user, and/or may be displayed on a shooting interface configured to shoot an image associated with the position information, and the like.

The position preview interface may be configured as an interface for a user to view associated position information of the user. The associated position information of a user may be regarded as the position information associated with the user, such as current position information of the user or default position information of the user, or the like.

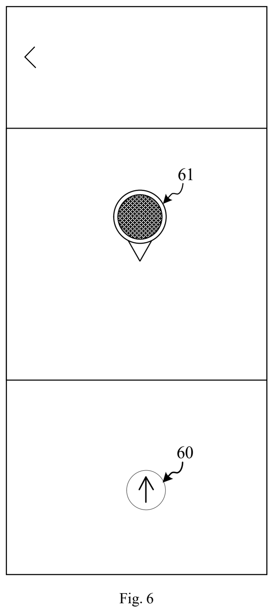

As shown in Fig. 2, taking a position exchange control 20 is displayed in the chat interface as an example, when detecting that the first user triggers the position exchange control 20 that is displayed, it is determineed that the second information display operation is received, and in response to the second information display operation, displaying the position preview interface, and displaying the associated position information of the first user in a clear display state on the position preview interface, as shown in Fig. 6, such that the first user may view and/or adjust the associated position information thereof. In this way, when detecting that the first user triggers a preset sending control 60 on the position preview interface, it is determined that the preset information sending operation is received, and the second position information to be exchanged 40 is sent according to the associated position information displayed on the position preview interface. For example, the second position information to be exchanged 40 is generated according to the associated position information displayed on the position preview interface, and the second position information to be exchanged 40 is sent. The current interface may be switched from the position preview interface to the chat interface, and the second position information to be exchange 40d is displayed in the first display state on the chat interface, as shown in Fig. 4.

In the present embodiment, when the associated position information of the first user is displayed on the position preview interface, it may also be supported that the user may adjust the associated position information displayed on the position preview interface within a preset range, so as to generate at least one of the first position information or the second position information that the first user wants to send according to the adjusted associated position information. For example, the first user may adjust the associated position information within the preset range by dragging a position indicator 61 (as shown in Fig. 6) displayed on the position preview interface and moving the position indicator in a map screen. At this time, optionally, the method for displaying chat information provided in the present embodiment may also include: in response to the position information adjustment operation, adjusting the associated position information within a preset range. The preset range may be understood as a preset distance range or a position range, which can be configured according to needs.

In the present embodiment, the user may also add a target image associated with the associated position information thereof, to send at least one of the first position information or second position information containing the target image. At this time, optionally, the method for displaying the chat information provided in the present embodiment may also include: in response to an image addition operation, adding a target image corresponding to the image addition operation, and associating the associated position information with the target image.

The image addition operation may be a trigger operation for instructing to add an image associated with the associated position information, and the image addition operation may be executed in any method, which is not limited herein. The target image may be an image to be added as instructed by the image addition operation, and may be an image associated with the associated position information of the user, such as an image of the landscape at the position corresponding to the associated position information or an image of a place at the position corresponding to the associated position information. The target image may be obtained by shooting or selecting from a local album, which may be configured according to needs.

Specifically, when the image addition operation is received from the first user, a target image may be added and associated with the associated position information of the first user.

In some embodiments, displaying the chat information provided in the present embodiment may also include: in response to a second position viewing operation, displaying at least a part of the historical position information exchanged by at least part of the users associated with the first user in the chat interface.

The second position viewing operation may be a trigger operation for instructing to display at least part of the historical position information exchanged by at least part of the users, such as an operation that triggers a viewing control, the viewing control may be displayed in any display position. The historical position information of a user may be regarded as position information exchanged by the user with the first user by sending at least one of the first position information or the second position information in the chat interface before the current moment.

In the above embodiment, the first user may view at least part of the position information exchanged on the chat interface by at least part of the users associated with the first user using the second position viewing operation.

Specifically, in response to receiving the second position viewing operation from the first user, at least part of the historical position information exchanged by at least part of the users associated with the first user in the chat interface may be displayed.

The display manner of the historical position information may be configured according to needs. As an example, a user can be used as the display dimension to display historical position information. For example, in response to receiving the second position viewing operation for a user, some or all of the historical position information exchanged by the user with the first user in one or more chat interfaces may be displayed. As yet another example, a chat interface can be used as the display dimension to display the historical position information. For example, in response to receiving a second position viewing operation for a chat interface, part or all of the historical position information exchanged by the users in the chat interface with the first user may be displayed. As yet another example, time can be used as the display dimension to display the historical position information. For example, in response to receiving the historical position information viewing operation, the historical position information exchanged by users associated with the first user with the first user within a preset time range may be displayed.

The method for displaying chat information provided in the present embodiment includes: receiving a display operation for a chat interface from a first user; displaying the chat interface in response to the display operation, wherein the chat interface supports displaying, in a first display state, at least part of first position information in the chat interface, and the first position information is switched to a second display state in response to determining that a user sends second position information for the first position information, wherein position information in the chat interface is chat information, the position information includes at least one of the first position information or the second position information, and the position information includes at least one of an image or text. By using the foregoing technical solution, the present embodiment supports that a user may view the first position information sent by other users by sending the second position information, which diversifies the display manner and interaction manner of the position information.

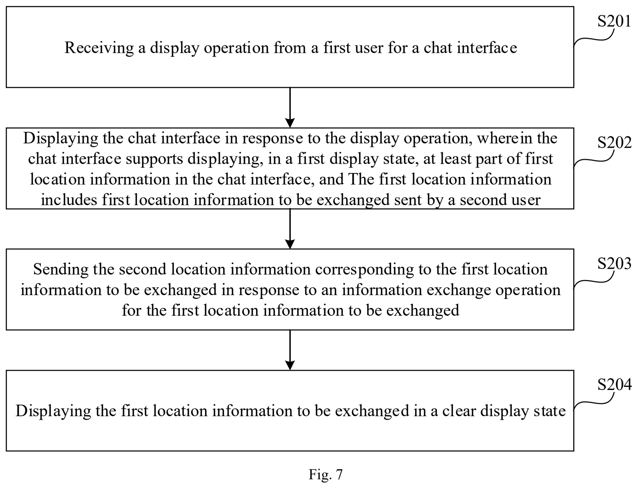

Fig. 7 is a schematic flow chart of another method for displaying chat information provided in an embodiment of the present disclosure. The implementations in the present embodiment may be combined with one or more optional implementations in the preceding embodiment. Optionally, the first position information includes first position information to be exchanged sent by a second user, where after displaying the chat interface, the method further includes: in response to an information exchange operation for the first position information to be exchanged, sending second position information corresponding to the first position information to be exchanged; and displaying the first position information to be exchanged in a clear display state.

Accordingly, as shown in Fig. 7, the method for displaying chat information in the present embodiment may include:
S201: receiving a display operation from a first user for a chat interface.
S202: displaying the chat interface in response to the display operation, wherein the chat interface supports displaying, in a first display state, at least part of first position information in the chat interface, and the first position information is switched to a second display state in response to determining that a user sends second position information for the first position information, wherein position information in the chat interface is chat information, the position information includes at least one selected from a group consisting of the first position information and the second position information, and the position information includes at least one selected from a group consisting of an image and text, the first display state is a blurred display state, and the second display state is a clear display state.

In the present embodiment, as shown in Fig. 2, the chat interface supports displaying first position information to be exchanged 21 in the blurred display state.

The first position information to be exchanged may be regarded as the position information sent by the first user on the chat interface, which may be sent by a user other than the first user on the chat interface. The second user may be regarded as the user that sends the first position information to be exchanged.

S203: sending the second position information corresponding to the first position information to be exchanged in response to an information exchange operation for the first position information to be exchanged.

The information exchange operation may be a trigger operation for instructing to send the second position information corresponding to the first position information to be exchanged, such as an operation that triggers a sending control for instructing to send the second position information.

As an example, in response to receiving the information exchange operation for the first position information to be exchanged from the first user, the second position information corresponding to the first position information to be exchanged may be sent.

In the present embodiment, optionally, the information exchange operation may be applied within a position preview interface. For example, in response to receiving the first information display operation of the first user, associated position information of the first user may be displayed in the position preview page, such that the first user may view or adjust the associated position information. In response to receiving the information exchange operation applied on the position preview interface, for example, in response to detecting that a sending control on the position preview interface is triggered by the first user, generating the second position information corresponding to the first position information to be exchanged based on the associated position information displayed on the position preview interface, and sending the second position information.

In this regard, optionally, before in response to the information exchange operation for the first position information to be exchanged, sending the second position information corresponding to the first position information to be exchanged , the method further includes: in response to a first information display operation, displaying the associated position information of the first user on the position preview interface; and sending the second position information corresponding to the first position information to be exchanged includes: sending the second position information corresponding to the first position information to be exchanged according to the associated position information displayed on the position preview interface. The displaying manner and adjusting manner of the associated position information and the generation manner and sending manner of the second position information are similar to those used for the first position information to be exchanged, so they will not be described again here.

In some embodiments, displaying the chat information provided in the present embodiment further includes: at least one of the following: displaying a first exchange control corresponding to the first position information to be exchanged on the chat interface, wherein the first exchange control is configured to trigger the execution of the first information display operation; and in response to a trigger operation for the first position information to be exchanged, displaying the position preview interface and displaying the first position information to be exchanged and a second exchange control on the position preview interface, wherein the first position information to be exchanged is displayed in a blurred display state on the position preview interface, and the second exchange control is configured to trigger the execution of the first information display operation.

The first exchange control may be regarded as an exchange control displayed on the chat interface corresponding to the first position information to be exchanged. The second exchange control may be regarded as an exchange control displayed on the position preview interface corresponding to the first position information to be exchanged. The first exchange control and second exchange control may be configured to trigger the execution of the first information display operation.

In the above embodiment, it is supported that the user may perform the first information display operation on at least one of the chat interface or the position preview interface to view the associated position information thereof on the position preview interface.

For example, as shown in Fig. 2, in response to displaying the first position information to be exchanged 21 (as shown by the chat information 3 in Fig. 2) in the chat interface, the first exchange control 22 may be further displayed on the chat interface. In this way, in response to detecting that the first user triggers the first exchange control 22, the current interface may be switched from the chat interface to the position preview interface, and the associated position information of the first user is displayed on the position preview interface, such that the first user may send the second position information corresponding to the first exchange position information 21 based on the associated position information thereof.

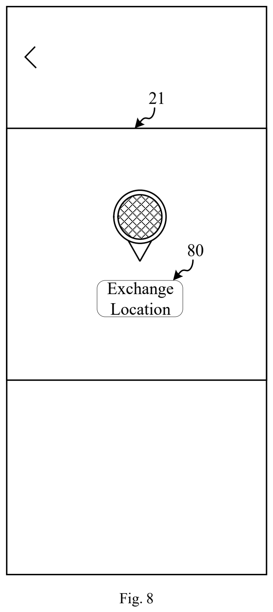

Referring to Fig. 2 again, the first position information to be exchanged 21 sent by the second user may be displayed on the chat interface. In response to detecting that the first user triggers the first position information to be exchanged 21, the current interface may be switched from the chat interface to the position preview interface, and the first position information to be exchanged 21 and furthermore, the second exchange control 80 are displayed in the blurred display state on the position preview interface, as shown in Fig. 8. In this way, in response to detecting that the first user triggers the second exchange control 80, the associated position information of the first user is displayed on the position preview interface, such that the first user may send the second position information corresponding to the first exchange position information 21 based on the associated position information thereof.

S204: displaying the first position information to be exchanged in the clear display state.

Specifically, after the first user sends the second position information corresponding to the first position information to be exchanged, the first position information to be exchanged may be displayed in the clear display state.

In the present embodiment, the first position information to be exchanged may be displayed in the clear display state in any way. For example, the first position information to be exchanged may be displayed in the clear display state only on the position preview interface or the chat interface, or the first position information to be exchanged may be displayed in the clear display state in both the position preview interface and the chat interface. In this regard, optionally, displaying the first position information to be exchanged in a clear display state includes at least one of: displaying the first position information to be exchanged in the clear display state on the position preview interface; and displaying the first position information to be exchanged in the clear display state in the chat interface.

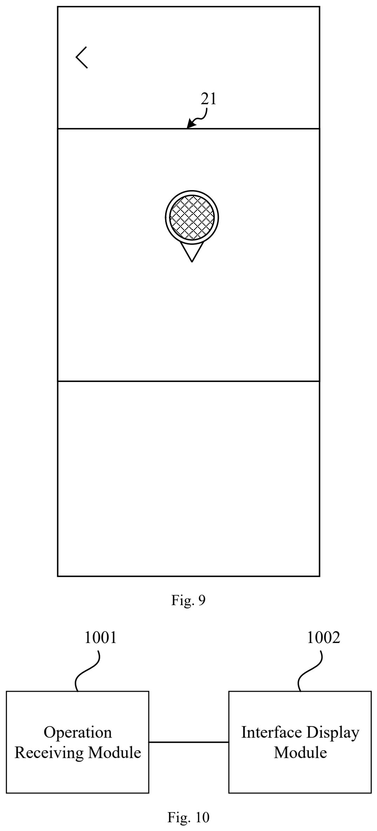

As an example, in response to detecting that the first user performs an information exchange operation for the first position information to be exchanged 21 on the position preview interface, the second position information corresponding to the first position information to be exchanged 21 may be sent, and the first position information to be exchanged 21 is displayed in the clear display state on the position preview interface, as shown in Fig. 9. In addition, in response to detecting that the first user switches the current interface from the position preview interface to the chat interface, the first position information to be exchanged 21 and the second position information sent by the first user for the first position information to be exchanged 21 (as shown in Fig. 3) may be displayed on the chat interface in the clear display state, as shown in Fig. 3.

**In** some embodiments, after displaying the first position information to be exchanged in the clear display state, the method further includes: in response to the first position viewing operation for the first position information to be exchanged, displaying a position details interface of the first position information to be exchanged, where the position details interface includes the first position information to be exchanged that is displayed in the clear display state.

The first position viewing operation may be a trigger operation for instructing to display a position details interface of the first position information to be exchanged, such as an operation that triggers the display of the first position information to be exchanged in the clear display state on the chat interface or the position preview interface. The position details interface may contain the first position information to be exchanged in the clear display state. For example, the position details interface may be a map interface, and when the map interface is displayed, the position corresponding to the first position information to be exchanged may be used as the position to be displayed.

In the embodiment, in response to receiving the first position viewing operation for the first position information to be exchanged from the first user, the position details interface of the first position information to be exchanged information may be displayed, and the position may be displayed based on the first position information to be exchanged on the position details interface, such that the first user may view or navigate the position corresponding to the first position information to be exchanged.

In some embodiments, the position information to be exchanged has a preset time condition, where a peer user may complete an exchange interaction only when the preset time condition is met after the position information to be exchanged is sent; and in response to that the timeout expires, the receiving user cannot exchange a position any more. For example, in response to that time elapsed after the chat information 3 in Fig. 4 being sent exceeds a preset threshold, the chat information 3 is displayed in a blurred state and exchange of position is no longer supported.

The preset time condition may be configured according to needs. For example, the preset time condition may be configured to be that the time elapsed after receiving the first position information is lower than or equal to a preset duration.

For example, in response to receiving an information exchange operation for the first position information to be exchanged, it may determine whether the current condition meets the preset time condition, and if the preset time condition is met, the second position information corresponding to the first position information to be exchanged may be sent; and/or, if the preset time condition is not met, the second position information corresponding to the first position information to be exchanged is not sent in response to the information exchange operation. In this regard, optionally, sending the second position information corresponding to the first position information to be exchanged includes: in response to that the current condition meets the preset time condition, sending second position information corresponding to the first position information to be exchanged.

For another example, the first exchange control may have a triggerable state and a non-triggerable state. When the first exchange control is in the triggerable state, the user may trigger the first exchange control to perform the first information display operation. When the first exchange control is in a non-triggerable state, the user cannot trigger the first exchange control. For example, no response is provided for the operation of triggering the first exchange control by the user.

In this way, when the first position information to be exchanged meets the preset condition, the first exchange control corresponding to the first position information to be exchanged may be displayed in the triggerable state on the chat interface, as shown in Fig. 2. Additionally or alternatively, in response to that the first position information to be exchanged does not meet the preset time condition, the first exchange control corresponding to the first position information to be exchanged displayed on the chat interface may be displayed in the non-triggerable state, for example, grayed out, as shown in Fig. 4, to remind the user that the first exchange control is no longer triggerable. Alternatively, the first exchange control displayed on the chat interface that corresponds to the first position information to be exchanged is hidden.

In this regard, displaying the first exchange control corresponding to the first position information to be exchanged on the chat interface may include: in response to that the current condition meets the preset time condition, displaying the first exchange control corresponding to the first position information to be exchanged in the triggerable state; and/or, displaying the chat information provided in the present embodiment may also include: in response to that the current condition does not meet the preset time condition, displaying the first exchange control corresponding to the first position information to be exchanged in the non-triggerable state on the chat interface, or hiding the first exchange control corresponding to the first position information to be exchanged displayed on the chat interface.

The method for displaying chat information provided in the present embodiment allows for the first user to view the first position information sent by the second user by sending the second position information of the second user, which further diversifies the sending manner and viewing manner of position information.

Fig. 10 is a structural block diagram of an apparatus for displaying chat information provided in an embodiment of the present disclosure. The apparatus may be embodied by software and/or hardware, may be configured in an electronic device, typically in a mobile phone or tablet, and may display at least part of the position information on the chat interface in different display states before and after position exchange by performing the method for displaying chat information. As shown in Fig. 10, the apparatus for displaying chat information provided in the present embodiment may include: an operation receiving module 1001 and an interface display module 1002, where:
the operation receiving module 1001 is configured to receive a display operation for a chat interface from a first user;
the interface display module 1002 is configured to, display the chat interface in response to the display operation, wherein the chat interface supports displaying, in a first display state, at least part of first position information in the chat interface, and the first position information being switched to a second display state in response to determining that a user sends second position information for the first position information, wherein position information in the chat interface is chat information, the position information includes at least one selected from a group consisting of the first position information and the second position information, and the position information includes at least one selected from a group consisting of an image and text.

The apparatus for displaying chat information provided in the present embodiment receives, via the operation receiving module, the display operation for the chat interface from the first user; and via the interface display module, in response to the display operation, display the chat interface, where the chat interface supports displaying at least part of first position information on the chat interface in a first display state, the first position information switches to the second display state after determining that a user sends second position information for the first position information, the position information on the chat interface is the chat information, the position information includes at least one selected from a group consisting of the first position information and the second position information, and the position information includes at least one selected from a group consisting of an image and text. By using the foregoing technical solution, the present embodiment supports that a user may view the first position information sent by other users by sending the second position information, which diversifies the display manner and interaction mode of the position information.

In the foregoing implementation, the first display state may be a blurred display state, and the second display state may be a clear display state.

In the foregoing implementation, the first position information may include first position information to be exchanged sent a second user. The apparatus for displaying chat information provided in the present embodiment may further include: a sending module configured to, after displaying the chat interface, send the second position information corresponding to the first position information to be exchanged in response to an information exchange operation for the first position information to be exchanged; and a first display module configured to display the first position information to be exchanged in a clear display state.

Furthermore, the apparatus for displaying chat information provided in the present embodiment may further include: a second display module configured to, before send the second position information corresponding to the first position information to be exchanged in response to the information exchange operation for the first position information to be exchanged, display associated position information of the first user on a position preview interface in response to a first information display operation; the sending module may be configured to send the second position information corresponding to the first position information to be exchanged according to the associated position information displayed on the position preview interface.

Furthermore, the apparatus for displaying chat information provided in the present embodiment may further include at least one of: a first control display module configured to display a first exchange control corresponding to the first position information to be exchanged on the chat interface, wherein the first exchange control is configured to trigger the execution of the first information display operation; and a second control display module configured to, in response to a trigger operation for the first position information to be exchanged, displaying the position preview interface and displaying the first position information to be exchanged and a second exchange control on the position preview interface, wherein the first position information to be exchanged is displayed in a blurred display state on the position preview interface, and the second exchange control is configured to trigger the execution of the first information display operation.

In the foregoing implementation, the first control display module may include: in response to that a current condition meets a preset time condition, display the first exchange control corresponding to the first position information to be exchanged in a triggerable state on the chat interface; and/or, the apparatus for displaying chat information provided in the present embodiment may further include: a third control display module configured to, in response to that a current condition does not meet the preset time condition, display the first exchange control corresponding to the first position information to be exchanged in a non-triggerable state on the chat interface, or hide the first exchange control corresponding to the first position information to be exchanged displayed on the chat interface.

In the foregoing implementation, the first display module may be configured to implement at least one of: display the first position information to be exchanged in the clear display state on the position preview interface; and display the first position information to be exchanged in the clear display state on the chat interface.

Furthermore, the apparatus for displaying chat information provided in the present embodiment may further include: an interface display module configured to, after displaying the first position information to be exchanged in the clear display state, in response to a first position viewing operation for the first position information to be exchanged, display a position details interface of the first position information to be exchanged, wherein the position details interface includes the first position information to be exchanged being displayed in the clear display state.

In the foregoing implementation, the sending module may be configured to: in response to that a current condition meets a preset time condition, send the second position information corresponding to the first position information to be exchanged.

In the foregoing implementation, the first position information may include second position information to be exchanged sent by the first user, where the interface display module 1002 may include: an information sending unit configured to, in response to a preset information sending operation, send the second position information to be exchanged and displaying, in the first display state, the second position information to be exchanged on the chat interface; and a state switching module configured to, in response to determining the second position information corresponding to the second position information to be exchanged being sent, switch the second position information to be exchanged from the first display state to the second display state.

Furthermore, the apparatus for displaying chat information provided in the present embodiment may further include: a third display module configured to, after displaying the chat interface, in response to a second information display operation, display associated position information of the first user in the clear display state on the position preview interface; the information sending unit may be configured to send the second position information to be exchanged according to the associated position information displayed on the position preview interface.

Furthermore, the apparatus for displaying chat information provided in the present embodiment may further include at least one of: a position adjustment module configured to, in response to a position information adjustment operation, adjust the associated position information within a preset range; and an image addition module configured to, in response to an image addition operation, add a target image corresponding to the image addition operation and associating the associated position information with the target image.

In the foregoing implementation, the chat interface supports displaying, in the first display state, at least part of the first position information in the chat interface, which may include: the chat interface supports displaying, in the first display state, at least part of position-related information content of the first position information.

Furthermore, the apparatus for displaying chat information provided in the present embodiment may further include: a fourth display module configured to, in response to a second position viewing operation, display at least part of historical position information exchanged by at least part of users associated with the first user in the chat interface.

The apparatus for displaying chat information provided in the embodiments of the present disclosure may implement the method for displaying chat information provided in any embodiment of the present disclosure, with a corresponding functional module and beneficial effect for implementing the method for displaying chat information. For technical details not described in detail in the present embodiment, see the method for displaying chat information provided in any embodiment of the present disclosure.

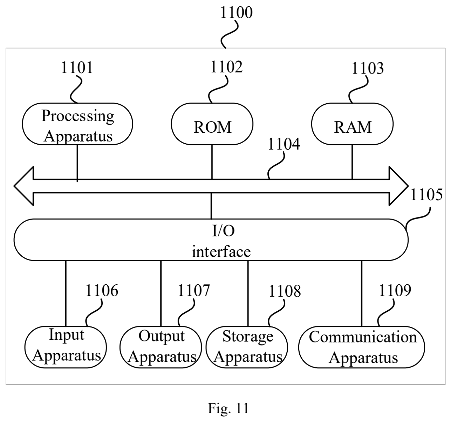

Reference is made to Fig. 11 below, which illustrates a schematic structural diagram of an electronic device 1100 (such as a terminal device or a server) suitable for implementing the embodiments of the present disclosure. The terminal device in the embodiments of the present disclosure may include, but is not limited to, mobile terminals such as a mobile phone, a laptop, a digital broadcast receiver, a personal digital assistant (PDA), a tablet computer, a portable multimedia player (PMP), a vehicle-mounted terminal (such as a vehicle-mounted navigation terminal), etc., and fixed terminals such as a digital TV, a desktop computer, etc. The electronic device shown in Fig. 11 is only an example, and should not impose any limitation to the function and usage scope of the embodiments of the present disclosure.

As shown in Fig. 11, the electronic device 1100 may include a processing apparatus 1101 (such as a central processing unit, a graphics processing unit, etc.), which may perform various appropriate actions and processing according to a program stored in a read-only memory (ROM) 1102 or a program loaded from a storage apparatus 1108 into a random access memory (RAM) 1103. The RAM 1103 also stores various programs and data required for the operation of the electronic device 1100. The processing apparatus 1101, the ROM 1102, and the RAM 1103 are connected to each other through a bus 1104. An input/output (I/O) interface 1105 is also connected to the bus 1104.

Generally, the following apparatuses may be connected to the I/O interface 1105: an input apparatus 1106, including, for example, a touchscreen, a touchpad, a keyboard, a mouse, a camera, a microphone, an accelerometer, a gyroscope, etc.; an output apparatus 1107, including, for example, a liquid crystal display (LCD), a speaker, a vibrator, etc.; a storage apparatus 1108, including, for example, a magnetic tape, a hard disk, etc.; and a communication apparatus 1109. The communication apparatus 1109 may allow the electronic device 1100 to perform wireless or wired communication with other devices to exchange data. Although Fig. 11 shows the electronic device 1100 having various apparatuses, it should be understood that not all of the illustrated apparatuses are required to be implemented or provided. Alternatively, more or fewer apparatuses may be implemented or provided.

Particularly, according to the embodiments of the present disclosure, the processes described above with reference to the flowcharts may be implemented as a computer software program. For example, an embodiment of the present disclosure includes a computer program product, which includes a computer program carried on a non-transitory computer-readable medium. The computer program includes program codes for executing the method shown in the flowchart. In such an embodiment, the computer program may be downloaded and installed from a network through the communication apparatus 1109, or may be installed from the storage apparatus 1108, or may be installed from the ROM 1102. When the computer program is executed by the processing apparatus 1101, the above functions defined in the method of the embodiments of the present disclosure are executed.

It should be noted that the above computer-readable medium in the present disclosure may be a computer-readable signal medium or a computer-readable storage medium, or any combination thereof. The computer-readable storage medium may be, for example, but not limited to, an electrical, magnetic, optical, electromagnetic, infrared, or semiconductor system, apparatus, or device, or any combination thereof. More specific examples of the computer-readable storage medium may include, but are not limited to, an electrical connection with one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, the computer-readable storage medium may be any tangible medium that contains or stores a program that may be used by or in combination with an instruction execution system, apparatus, or device. In the present disclosure, the computer-readable signal medium may include a data signal propagated in a baseband or as a part of a carrier wave, and computer-readable program codes are carried in the data signal. The data signal propagated in this manner may take a variety of forms, including but not limited to an electromagnetic signal, an optical signal, or any suitable combination thereof. The computer-readable signal medium may also be any computer-readable medium other than the computer-readable storage medium. The computer-readable signal medium may send, propagate, or transmit a program used by or in combination with an instruction execution system, apparatus, or device. The program codes included on the computer-readable medium may be transmitted by any suitable medium, including but not limited to a wire, an optical cable, a radio frequency (RF), etc., or any suitable combination thereof.

In some implementations, the client and the server may communicate using any currently known or future developed network protocol such as a hypertext transfer protocol (HTTP), and may be interconnected with any form or medium of digital data communication (for example, a communication network). Examples of the communication network include a local area network ("LAN"), a wide area network ("WAN"), an internetwork (for example, the Internet), a peer-to-peer network (for example, an ad hoc network), and any currently known or future developed network.

The above computer-readable medium may be included in the above electronic device; or may exist alone without being assembled into the electronic device.

The above computer-readable medium carries one or more programs, and when the above one or more programs are executed by the electronic device, the electronic device is caused to: receive a display operation for a chat interface from a first user; display the chat interface in response to the display operation, wherein the chat interface supports displaying, in a first display state, at least part of first position information in the chat interface, and the first position information being switched to a second display state in response to determining that a user sends second position information for the first position information, wherein position information in the chat interface is the chat information, the position information includes at least one selected from a group consisting of the first position information and the second position information, and the position information includes at least one selected from a group consisting of an image and text.

The computer program codes for executing the operations of the present disclosure may be written in one or more programming languages or a combination thereof, where the above programming languages include object-oriented programming languages such as Java, Smalltalk, C++, and also include conventional procedural programming languages such as the "C" programming language or similar programming languages. The program codes may be executed entirely on a user computer, partly on a user computer, as a stand-alone software package, partly on a user computer and partly on a remote computer, or entirely on a remote computer or a server. In the case of involving the remote computer, the remote computer may be connected to the user computer through any type of network, including a local area network (LAN) or a wide area network (WAN), or the connection may be made to an external computer (for example, through the Internet using an Internet service provider).

The flowcharts and block diagrams in the drawings illustrate the architecture, functionality, and operation of possible implementations of systems, methods, and computer program products according to various embodiments of the present disclosure. In this regard, each block in the flowcharts or block diagrams may represent a module, a program segment, or a part of codes, and the module, the program segment, or the part of codes contains one or more executable instructions for implementing specified logical functions. It should also be noted that, in some alternative implementations, the functions noted in the blocks may also occur in an order different from that noted in the drawings. For example, two blocks shown in succession may, in fact, be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules involved in the embodiments of the present disclosure may be implemented in software or hardware. The name of a module does not constitute a limitation on the module itself under certain circumstances.

The functions described herein above may be performed, at least in part, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof.

In one or more embodiments of the present disclosure, a method for displaying chat information is provided, where the method includes:
receiving a display operation for a chat interface from a first user;
in response to the display operation, displaying the chat interface, where the chat interface supports displaying at least part of first position information on the chat interface in a first display state, and in response to determining that a user sends second position information for the first position information, switching the first position information to a second display state, where the position information on the chat interface is the chat information, the position information includes at least one selected from a group consisting of the first position information and the second position information, and the position information includes at least one selected from a group consisting of an image and text.

According to one or more embodiments of the present disclosure, the first display state is a blurred display state, and the second display state is a clear display state.

According to one or more embodiments of the present disclosure, the first position information includes first position information to be exchanged sent by a second user and, after the displaying the chat interface, the method further includes:
in response to an information exchange operation for the first position information to be exchanged, sending the second position information corresponding to the first position information to be exchanged; and
displaying the first position information to be exchanged in the clear display state.

According to one or more embodiments of the present disclosure, after the in response to an information exchange operation for the first position information to be exchanged, sending the second position information corresponding to the first position information to be exchanged, the method further includes:
in response to a first information display operation, displaying associated position information of the first user on a position preview interface;
the sending the second position information corresponding to the first position information to be exchanged includes:
   sending the second position information corresponding to the first position information to be exchanged according to the associated position information displayed on the position preview interface.

According to one or more embodiments of the present disclosure, the method further includes at least one of:
displaying a first exchange control corresponding to the first position information to be exchanged on the chat interface, where the first exchange control is configured to trigger the execution of the first information display operation;
in response to a trigger operation for the first position information to be exchanged, displaying the position preview interface, and displaying the first position information to be exchanged and a second exchange control on the position preview interface, where the first position information to be exchanged is displayed in the blurred display state on the position preview interface, and the second exchange control is configured to trigger the execution of the first information display operation.

According to one or more embodiments of the present disclosure, the displaying a first exchange control corresponding to the first position information to be exchanged on the chat interface includes:
in response to that the current condition meets a preset time condition, displaying the first exchange control corresponding to the first position information to be exchanged in a triggerable state on the chat interface; and/or
the method further includes:
   in response to that the current condition does not meet the preset time condition, displaying the first exchange control corresponding to the first position information to be exchanged in a non-triggerable state on the chat interface, or hiding the first exchange control corresponding to the first position information to be exchanged displayed on the chat interface.

According to one or more embodiments of the present disclosure, the displaying the first position information to be exchanged in the clear display state includes at least one of:
displaying the first position information to be exchanged in the clear display state on the position preview interface;
displaying the first position information to be exchanged in the clear display state on the chat interface.

According to one or more embodiments of the present disclosure, after the displaying the first position information to be exchanged in the clear display state, the method further includes:
in response to a first position viewing operation for the first position information to be exchanged, displaying a position details interface of the first position information to be exchanged, where the position details interface includes the first position information to be exchanged that is displayed in the clear display state.

According to one or more embodiments of the present disclosure, the sending the second position information corresponding to the first position information to be exchanged includes:
in response to that the current condition meets a preset time condition, sending second position information corresponding to the first position information to be exchanged.

According to one or more embodiments of the present disclosure, the first position information includes second position information to be exchanged sent by the first user, and the displaying the chat interface includes:
in response to a preset information sending operation, sending the second position information to be exchanged, and displaying the second position information to be exchanged in the first display state on the chat interface;
in response to determining the sending of the second position information corresponding to the second position information to be exchanged, switching the second position information to be exchanged from the first display state to the second display state.

According to one or more embodiments of the present disclosure, after the displaying the chat interface, the method further includes:
in response to a second information display operation, displaying associated position information of the first user in the clear display state on a position preview interface;
the sending the second position information to be exchanged includes:
   sending the second position information to be exchanged according to the associated position information displayed on the position preview interface.

According to one or more embodiments of the present disclosure, the method further includes at least one of:
in response to a position information adjustment operation, adjusting the associated position information within a preset range;
in response to an image addition operation, adding a target image corresponding to the image addition operation, and associating the associated position information with the target image.

According to one or more embodiments of the present disclosure, the chat interface supports displaying at least part of the first position information in the first display state on the chat interface, which includes:
the chat interface supports displaying at least part of position-related information content of the first position information in the first display state.

According to one or more embodiments of the present disclosure, the method further includes:
in response to that a second position viewing operation, displaying at least part of historical position information exchanged by at least part of users associated with the first user on the chat interface.

According to one or more embodiments of the present disclosure, an apparatus for displaying chat information is provided, where the apparatus includes:
an operation receiving module configured to receive a display operation for a chat interface from a first user;
an interface display module configured to, in response to the display operation, display the chat interface, where the chat interface supports displaying at least part of first position information on the chat interface in a first display state, and in response to determining that a user sends second position information for the first position information, switch the first position information to a second display state, where the position information on the chat interface is the chat information, the position information includes at least one selected from a group consisting of the first position information and the second position information, and the position information includes at least one selected from a group consisting of an image and text.

According to one or more embodiments of the present disclosure, an electronic device is provided, including:
one or more processors;
a memory configured to store one or more programs,
where, the one or more programs, when being executed by the one or more processors, implement the method for displaying chat information according to any one of the embodiments of the present disclosure.

According to one or more embodiments of the present disclosure, a computer-readable storage medium with a computer program stored thereon is provided, where the computer program, when being executed by a processor, implements the method for displaying chat information according to any one of the embodiments of the present disclosure.

The above description is only preferred embodiments of the present disclosure and an illustration of the applied technical principles. Those skilled in the art should understand that the scope of disclosure involved in the present disclosure is not limited to the technical solution formed by a specific combination of the above technical features, and should also cover other technical solutions formed by any combination of the above technical features or equivalent features thereof without departing from the above disclosed concept, for example, a technical solution formed by replacing the above features with technical features with similar functions disclosed in the present disclosure (but not limited to).

In addition, although various operations are depicted in a specific order, this should not be understood as requiring these operations to be performed in the specific order shown or in a sequential order. Under certain circumstances, multitasking and parallel processing may be advantageous. Likewise, although the above discussion contains several specific implementation details, these should not be construed as limiting the scope of the present disclosure. Certain features that are described in the context of separate embodiments may also be implemented in combination in a single embodiment. Conversely, various features that are described in the context of a single embodiment may also be implemented in multiple embodiments individually or in any suitable sub-combination.

Although the subject matter has been described in language specific to structural features and/or logical actions of the method, it should be understood that the subject matter defined in the appended claims is not necessarily limited to the specific features or actions described above. Rather, the specific features and actions described above are only example forms of implementing the claims. Regarding the apparatus in the above embodiments, the specific manner in which each module performs operations has been described in detail in the embodiments related to the method, and will not be described in detail here.

## Claims

1. A method for displaying chat information, comprising:
receiving a display operation for a chat interface from a first user;
displaying the chat interface in response to the display operation, wherein the chat interface supports displaying, in a first display state, at least part of first position information in the chat interface, and the first position information is switched to a second display state in response to determining that a user sends second position information for the first position information, wherein position information in the chat interface is chat information, the position information comprises at least one selected from a group consisting of the first position information and the second position information, and the position information comprises at least one selected from a group consisting of an image and text.

2. The method according to claim 1, wherein the first display state is a blurred display state, and the second display state is a clear display state.

3. The method according to claim 1 or 2, wherein the first position information comprises first position information to be exchanged sent by a second user, and after displaying the chat interface, the method further comprises:
sending the second position information corresponding to the first position information to be exchanged in response to an information exchange operation for the first position information to be exchanged; and
displaying the first position information to be exchanged in the clear display state.

4. The method according to claim 3, wherein before sending the second position information corresponding to the first position information to be exchanged in response to the information exchange operation for the first position information to be exchanged, the method further comprises:
displaying associated position information of the first user on a position preview interface in response to a first information display operation;
wherein sending the second position information corresponding to the first position information to be exchanged comprises:
sending the second position information corresponding to the first position information to be exchanged according to the associated position information displayed on the position preview interface.

5. The method according to claim 4, further comprising at least one of:
displaying a first exchange control corresponding to the first position information to be exchanged on the chat interface, wherein the first exchange control is configured to trigger execution of the first information display operation; and
in response to a trigger operation for the first position information to be exchanged, displaying the position preview interface and displaying the first position information to be exchanged and a second exchange control on the position preview interface, wherein the first position information to be exchanged is displayed in a blurred display state on the position preview interface, and the second exchange control is configured to trigger the execution of the first information display operation.

6. The method according to claim 5, wherein displaying the first exchange control corresponding to the first position information to be exchanged on the chat interface comprises:
in response to that a current condition meets a preset time condition, displaying the first exchange control corresponding to the first position information to be exchanged in a triggerable state on the chat interface; and/or
wherein the method further comprises:
in response to that a current condition does not meet the preset time condition, displaying the first exchange control corresponding to the first position information to be exchanged in a non-triggerable state on the chat interface, or hiding the first exchange control corresponding to the first position information to be exchanged displayed on the chat interface.

7. The method according to any one of claims 3 to 6, wherein displaying the first position information to be exchanged in the clear display state comprises at least one of:
displaying the first position information to be exchanged in the clear display state on the position preview interface; and
displaying the first position information to be exchanged in the clear display state on the chat interface.

8. The method according to any one of claims 3 to 7, wherein after displaying the first position information to be exchanged in the clear display state, the method further comprises:
in response to a first position viewing operation for the first position information to be exchanged, displaying a position details interface of the first position information to be exchanged, wherein the position details interface comprises the first position information to be exchanged is displayed in the clear display state.

9. The method according to claims 3 to 8, wherein sending the second position information corresponding to the first position information to be exchanged comprises:
in response to that a current condition meets a preset time condition, sending the second position information corresponding to the first position information to be exchanged.

10. The method according to claim 2, wherein the first position information comprises second position information to be exchanged sent by the first user, and displaying the chat interface comprises:
in response to a preset information sending operation, sending the second position information to be exchanged and displaying, in the first display state, the second position information to be exchanged on the chat interface; and
in response to determining the second position information corresponding to the second position information to be exchanged being sent, switching the second position information to be exchanged from the first display state to the second display state.

11. The method according to claim 10, wherein after displaying the chat interface, the method further comprises:
in response to a second information display operation, displaying associated position information of the first user in the clear display state on a position preview interface; and
wherein sending the second position information to be exchanged comprises:
sending the second position information to be exchanged according to the associated position information displayed on the position preview interface.

12. The method according to any one of claims 4 to 9, and claim 11, further comprising at least one of:
in response to a position information adjustment operation, adjusting the associated position information within a preset range; and
in response to an image addition operation, adding a target image corresponding to the image addition operation and associating the associated position information with the target image.

13. The method according to any one of claims 1 to 11, wherein the chat interface supports displaying, in the first display state, at least part of the first position information in the chat interface comprises:
the chat interface supports displaying, in the first display state, at least part of position-related information content of the first position information.

14. The method according to any one of claims 1 to 11, comprising:
in response to a second position viewing operation, displaying at least part of historical position information exchanged by at least part of users associated with the first user in the chat interface.

15. An apparatus for displaying chat information, comprising:
an operation receiving module configured to receive a display operation for a chat interface from a first user;
an interface display module configured to, display the chat interface in response to the display operation, wherein the chat interface supports displaying, in a first display state, at least part of first position information in the chat interface, and the first position information is switched to a second display state in response to determining that a user sends second position information for the first position information, wherein position information in the chat interface is the chat information, the position information comprises at least one selected from a group consisting of the first position information and the second position information, and the position information comprises at least one selected from a group consisting of an image and text.

16. An electronic device, comprising:
at least one processor; and
a memory communicatively connected to the at least one processor; wherein
the memory stores a computer program being executable by the at least one processor, and when the computer program is executed by the at least one processor, cause the at least one processor implements a method for displaying chat information according to any one of claims 1 to 14.

17. A computer-readable storage medium with computer instructions stored thereon, wherein the computer instruction is configured to cause a process to implement the method for displaying chat information according to any one of claims 1 to 14.
